# EUROPEAN PATENT SPECIFICATION

(11) **EP 2 606 736 B1**
(45) Date of publication and mention of the grant of the patent: **28.01.2015**
(21) Application number: 12184037.5
(22) Date of filing: 12.09.2012
(51) Int. Cl.: A22C 21/00

(54) **Method and scraper for releasing tissue connections between a fillet and a carcass of slaughtered poultry**
Verfahren und Schaber zum Lösen von Gewebeverbindungen zwischen einem Filet und einem Tierkörper eines geschlachteten Geflügels
Procédé et racleur destinés à libérer les connexions de tissus entre un filet et une carcasse de volaille abattue

(30) Priority: 20.12.2011 NL 2008001
(43) Date of publication of application: 26.06.2013
(73) Proprietor: Meyn Food Processing Technology B.V., 1511 MA Oostzaan (NL)
(72) Inventor: De Vos, Ferdinand Allard, 1511 MA Oostzaan (NL); Böhm, Jeroen, 1511 MA Oostzaan (NL); Verhagen, Marcel, 1511 MA Oostzaan (NL); Vonk, Pieter Willem, 1511 MA Oostzaan (NL)
(74) Representative: Van Breda, Jacobus

(56) References cited:
- EP-A2- 1 454 531
- US-A- 4 682 386
- US-A- 5 833 527

## Description

The invention relates to a method for releasing tissue connections between a fillet and a carcass of slaughtered poultry, using a scraper comprising a stem ending into a first scraping lip which is bent to follow a carcass contour. The invention relates also to said scraper.

Such a method and scraper are known from day to day practice and are used in high-speed processing lines for harvesting high-quality fillets from poultry carcasses on industrial scale.

US-A-4,682,386 discloses a bottom block assembly that has wing protrusions that generally tend to conform to the breast bone and keel of the breast of the poultry carcass mounted on a carrier that passes the bottom block assembly. The said wing protrusions tend to push and slice the meat of the carcass away from the skeletal structure. The bottom block assembly further has pointed portions of each of said wing protrusions that tend to slice and gouge into the meat toward the skeletal structure. According to US-A-4,682,386 the preamble of the main claim acknowledges as state-of-the-art a scraper for releasing tissue connections between a fillet and a carcass of slaughtered poultry, comprising a stem ending into a first scraping lip which is bent to follow a carcass contour, wherein the stem is provided with a second scraping lip.

To date the quality requirements of fillets are ever increasing resulting amongst others in the need to provide fillets free of any fatty tissue still attaching to the fillets. This imposes a heavy challenge on designers and developers of machinery for automated harvesting of fillets, since the removal of fatty tissue can hardly be automated.

It is therefore a first object of the invention to provide a method and apparatus capable to harvest fillets of poultry of the highest feasible quality.

It is a further object of the invention to provide a method and apparatus by which in the fillets can be harvested substantially free of attaching fatty tissue.

It is still a further object of the invention to automate to the largest possible extent the harvesting of fillets such that they are substantially free of attaching fatty tissue.

In connection with the previous object, it is an object of the invention to save on manual labour which would otherwise be required for providing fillets that are substantially free of attaching fatty tissue.

These and other objects and advantages are promoted by using a scraper according to claim 1 and a method according to claim 3 for releasing tissue connections between a fillet and a carcass of slaughtered poultry.

According to claim 1 a scraper for releasing tissue connections between a fillet and a carcass of slaughtered poultry is proposed, comprising a stem ending into a first scraping lip which is bent to follow a carcass contour, wherein the stem is provided with a second scraping lip which differentiates from the prior art in that the second scraping lip is shaped as a protrusion extending in line of the stem thus departing from the contour of the carcass for release of at least part of the fatty tissue connected to a side of the fillet.

The scraper of the invention enables that during scraping at least part of the fatty tissue connected to an exposed or uncovered side of the fillet is released therefrom. With the exposed or uncovered side of the fillet is meant the side of the fillet that does not attach to the carcass. Accordingly the fatty tissue can be released from the fillet by a scraper that is simultaneously applied for releasing the fillet from the carcass. This is highly beneficial from a viewpoint of processing efficiency and automation and avoids the necessity to manually remove the fatty tissue afterwards when the processing of the fillets is complete. The harvesting of the fillets can therefore be maintained at high speed whilst even improving on the quality of the harvested fillets and reducing the costs to acquire such high-quality fillets.

To promote the scraping of the fatty tissue from the surface of the fillet, it is advantageous that the second scraping lip is slightly offset with reference to the plane of the stem and/or the first scraping lip so as to introduce some play between the surface of the carcass and the second scraping lip at the time this second scraping lip is out of contact with the carcass so as to cause that during the scraping action the second scraping lip then will damage a membrane connecting the fatty tissue with the outer side of the fillet.

The invention will hereinafter be further elucidated with reference to a drawing of an exemplary embodiment of the scraper and its use in accordance with the invention.

In the drawing:
- figure 1 shows a scraper of the invention in a side view;
- figure 2 shows the scraper of the invention from below;
- figure 3 shows the scraper of the invention with a view at the first and second scraping lip;
- figure 4 schematically shows frontally the use of the scraper of the invention while processing a carcass on its carrier; and
- figure 5 shows the processing of figure 4 in a side view.

Whenever in the figures the same reference numerals are applied, these numerals refer to the same parts.

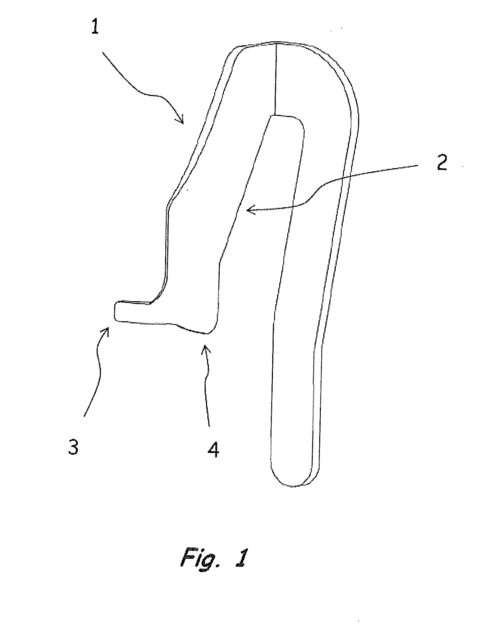

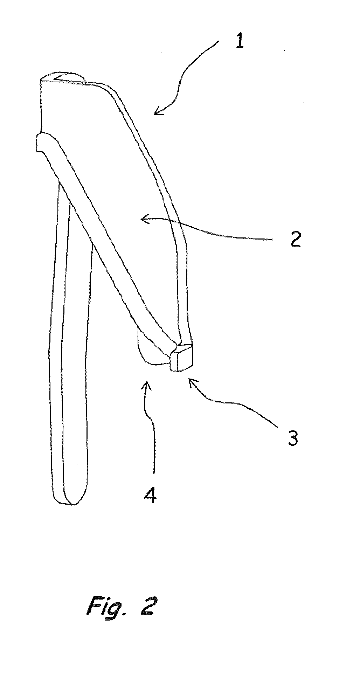

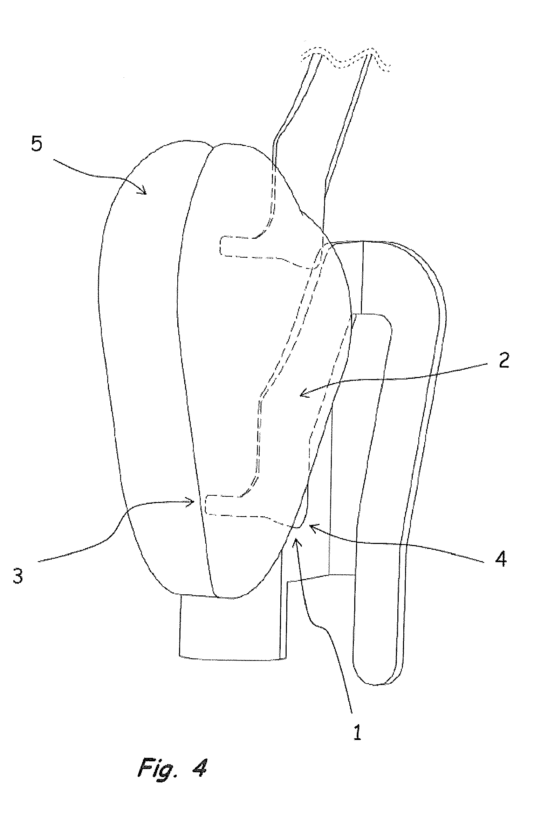

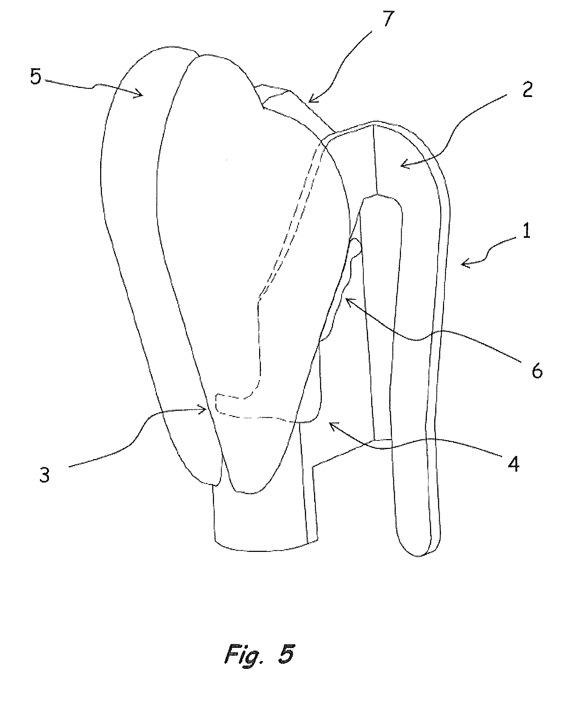

With reference first to figures 1-3, the scraper of the invention is generally denoted with reference 1. The scraper 1 is in accordance with its function intended for releasing tissue connections between a fillet 5 (see figures 4 and 5) and a carcass of slaughtered poultry, and comprises a stem 2 ending into a first scraping lip 3 which is bent out of the plane of the stem 2 to follow a carcass contour. This scraping lip 3 shaped according to the carcass contour ensures that during scraping the carcass is kept accurately positioned on the carrier 7 (see figure 5) for the carcass.

In accordance with the invention the stem 2 is provided with a second scraping lip 4 for release of at least part of the fatty tissue 6 connected to a side of the fillet 5, see again figure 5.

As can be best seen in figure 1 the second scraping lip 4 is shaped as a protrusion extending in line of the stem 2 thus departing from the contour of the carcass, which contour accords with the line of the stem 2 into the first scraping lip 3.

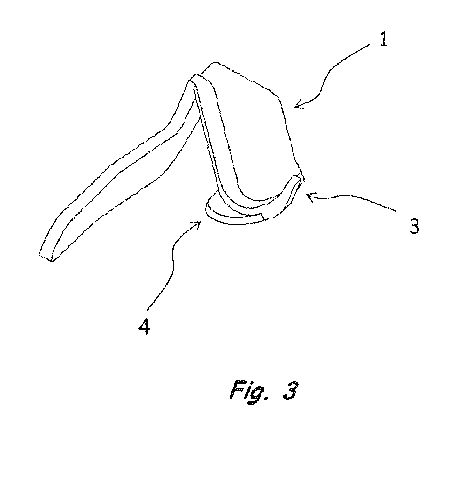

A further aspect is shown in Figure 3, which reveals that the second scraping lip 4 is slightly offset with reference to the mid-plane of the stem 2 and/or the first scraping lip 3. The offset between the second scraping lip 4 and be midplane of the stem 2 and/or the first scraping lip 3 introduces during scraping some play between the surface of the carcass and the second scraping lip 4 at the time this second scraping lip 4 loses contact with the carcass. This moment is shown in figure 4 (continuous line of scraper 1) and figure 5 and causes that the second scraping lip 4 then is in a position to damage a membrane connecting the fatty tissue 6 with the outer side of the fillet 5. Consequently during the process of scraping as schematically shown in figures 4 and 5 at least part of the fatty tissue 6 connected to the concerning side of the fillet 5 is released therefrom by scraping the fatty tissue 6 from the surface of the fillet 5 by a scraper 1 that is simultaneously applied in its primary function of releasing the fillet 5 from the carcass.

## Claims

1. Scraper (1) for releasing tissue connections between a fillet (5) and a carcass of slaughtered poultry, comprising a stem (2) ending into a first scraping lip (3) which is bent to follow a carcass contour, wherein the stem (2) is provided with a second scraping lip (4), **characterized in that** the second scraping lip (4) is shaped as a protrusion extending in line of the stem (2) thus departing from the contour of the carcass for release of at least part of the fatty tissue (6) connected to a side of the fillet (5).

2. Scraper according to claim 1, **characterized in that** the second scraping lip (4) is slightly offset with reference to the mid-plane of the stem (2) and/or the first scraping lip (3) so as to introduce some play between the surface of the carcass and the second scraping lip (4) at the time this second scraping lip (4) is out of contact with the carcass so as to cause that the second scraping lip (4) then damages a membrane connecting the fatty tissue (6) with the fillet (5).

3. Method for releasing tissue connections between a fillet (5) and a carcass of slaughtered poultry by scraping the fillet (5) loose from the carcass, wherein the scraping is carried out with a scraper as per claims 1 or 2 and wherein during the process of scraping at least part of the fatty tissue (6) connected to an exposed or uncovered side of the fillet (5) is released therefrom.

4. Method according to claim 3, **characterized in that** the fatty tissue (6) is released from the fillet (5) by a scraper (1) that is simultaneously applied for releasing the fillet (5) from the carcass.

5. Method according to claim 3 or 4, **characterized in that** the fatty tissue (6) is scraped from the surface of the fillet (5).

## Patentansprüche

1. Schaber (1) zum Auslösen von Gewebeverbindungen zwischen einem Filet (5) und einem Kadaver von geschlachtetem Geflügel, umfassend einen Stiel (2), der in einer ersten Schablippe (3) endet, die derart gebogen ist, dass sie der Kontur des Kadavers folgt, wobei der Stiel (2) mit einer zweiten Schablippe (4) zur Verfügung gestellt ist, **dadurch gekennzeichnet, dass** die zweite Schablippe (4) als Vorsprung geformt ist, der sich in einer Linie von dem Stiel (2) erstreckt, und damit von der Kontur des Kadavers abweicht, zum Ablösen von wenigstens eines Teils des Fettgewebes (6), das mit einer Seite des Filets (5) verbunden ist.

2. Schaber nach Anspruch 1, **dadurch gekennzeichnet, dass** die zweite Schablippe (4) leicht bezüglich der mittleren Ebene des Stieles (2) und/oder der ersten Schablippe (3) versetzt ist, um etwas Spiel zwischen der Oberfläche des Kadavers und der zweiten Schablippe (4) einzubringen, wenn diese zweite Schablippe (4) nicht mehr in Kontakt mit dem Kadaver ist, um zu verursachen, dass die zweite Schablippe (4) dann eine Membran verletzt, die das Fettgewebe (6) mit dem Filet (5) verbindet.

3. Verfahren zum Auslösen von Gewebeverbindungen zwischen einem Filet (5) und einem Kadaver von geschlachtetem Geflügel durch Abschaben des Filets (5) vom Kadaver, wobei das Abschaben mit einem Schaber nach den Ansprüchen 1 oder 2 durchgeführt wird, und wobei während des Prozesses des Schabens wenigstens ein Teil des Fettgewebes (6), das mit einer freigelegten oder nicht bedeckten Seite des Filets (5) verbunden ist, davon abgelöst wird.

4. Verfahren nach Anspruch 3, **dadurch gekennzeichnet, dass** das Fettgewebe (6) durch einen Schaber (1) von dem Filet (5) abgelöst wird, der gleichzeitig zum Ablösen des Filets (5) vom Kadaver angewendet wird.

5. Verfahren nach Anspruch 3 oder 4, **dadurch gekennzeichnet, dass** das Fettgewebe (6) von der Oberfläche des Filets (5) abgeschabt wird.

## Revendications

1. Racloir (1) destiné à dégager des connexions de tissu entre un filet (5) et une carcasse de volaille abattue, comprenant une tige (2) se terminant en un premier rebord de raclage (3) qui est coudé pour suivre un contour de carcasse, la tige (2) étant pourvue d'un second rebord de raclage (4), **caractérisé en ce que** le second rebord de raclage (4) est conformé comme une saillie s'étendant dans l'alignement de la tige (2), partant ainsi du contour de la carcasse pour dégager au moins une partie du tissu gras (6) connecté à un côté du filet (5).

2. Racloir selon la revendication 1, **caractérisé en ce que** le second rebord de raclage (4) est légèrement décalé par rapport au plan médian de la tige (2) et/ou le premier rebord de raclage (3) afin d'introduire un certain jeu entre la surface de la carcasse et le second rebord de raclage (4) au moment où ce second rebord de raclage (4) n'est pas en contact avec la carcasse afin d'amener le second rebord de raclage (4) à endommager une membrane reliant le tissu gras (6) au filet (5).

3. Procédé destiné à dégager des connexions de tissu entre un filet (5) et une carcasse de volaille abattue en détachant le filet (5) de la carcasse par raclage, le raclage étant réalisé au moyen d'un racloir selon la revendication 1 ou 2 et, au cours du processus de raclage, au moins une partie du tissu gras (6), reliée à un côté exposé ou découvert du filet (5), étant détachée du filet.

4. Procédé selon la revendication 3, **caractérisé en ce que** le tissu gras (6) est détaché du filet (5) par un racloir (1) qui est appliqué simultanément pour détacher le filet (5) de la carcasse.

5. Procédé selon la revendication 3 ou 4, **caractérisé en ce que** le tissu gras (6) est raclé de la surface du filet (5).
